# EUROPEAN PATENT APPLICATION

(11) **EP 1 561 502 A1**
(43) Date of publication of application: **10.08.2005**
(21) Application number: 05250119.4
(22) Date of filing: 12.01.2005
(51) Int. Cl.: B01D 27/10

(54) **Liquid filter**

(30) Priority: 23.01.2004 US 763713
(71) Applicant: ArvinMeritor Technology, LLC, Troy, MI 48084 (US)
(72) Inventor: Cline Steven L., Fayetteville North Carolina, 28306 (US)
(74) Representative: Jones, John Bryn

(57) **Abstract**

A fluid filter (13) includes a housing (12) having a tapping plate (14) with a first aperture (32). A center tube (24) is arranged in the housing proximate to the tapping plate (14). The center tube (24) includes a second aperture (34). An elastomeric valve assembly (37,38) is arranged between the center tube (24) and the tapping plate (14). The valve assembly (37,38) comprises a separate two-piece relief valve (37) and anti-drain back valve (38). The anti-drain back valve (38) is arranged adjacent to the first aperture (32) for selectively blocking the first aperture (32) to prevent fluid from exiting in the side of the filter during engine shut down. The relief valve (37) is arranged adjacent to the second aperture (34) for selectively blocking the second aperture (34) to permit fluid to flow past the relief valve (37) during high differential pressure conditions such as cold starts and plugged filter conditions.

## Description

### BACKGROUND OF THE INVENTION

This invention relates to a fluid filter such as an oil filter, and more particularly, the invention relates to a relief valve and anti-drain back valve for fluid filters.

Fluid filters such as oil filters typically include one or more valves to regulate the flow of fluid through the filter during various operating conditions. For example, the filter may incorporate an anti-drain back valve to prevent fluid from exiting the inlet side of the filter during engine shut down thereby carrying debris and oil from the filter element. A filter also may use a relief valve for permitting the fluid to bypass the filter element under high differential pressures, such as when the oil is very viscous during engine cold starts in oil filter applications or when the filter element becomes plugged with debris.

Many fluid filter valve configurations have been used. One common valve configuration uses a valve arranged near the tapping plate of the filter housing. A moveable piston is arranged adjacent to a fluid aperture. A coil spring biases the fluid piston to a desired position. The fluid piston slides axially relative to a center portion of the filter between open and closed positions. For fluid configurations having a center tube, a seal between the center tube and tapping plate must also be used to prevent fluid from bypassing the filter element. An additional valve is used within the filter to provide further control of the fluid flow through the filter. Additional seals are used with the valve to prevent fluid leakage. As a result, a typical fluid filter uses numerous assembled components that are costly. Furthermore, since so many components are required for the valves, a misalignment may result causing undesired operation of the valve. The spring and piston arrangement result in added length to the filter housing or reduced size of the filter element that may be packaged within the housing to accommodate size and motion of the piston assembly during operation. Therefore, what is needed is a more efficient design for fluid filter valves.

### SUMMARY OF THE INVENTION AND ADVANTAGES

The present invention provides a fluid filter including a housing having an end portion, such as tapping plate, with a first aperture. A center portion, such as a center tube, is arranged in the housing proximate to the end portion. The center portion includes a second aperture. In one embodiment, a valve assembly is arranged between the center second aperture. In one embodiment, a valve assembly is arranged between the center portion and the end portion in one example embodiment for creating a seal between the portions. The valve assembly may be constructed from an elastomeric material such as rubber.

The valve assembly comprises a two-piece relief valve and anti-drain back valve configuration. The anti-drain back valve is arranged adjacent to the first aperture for selectively blocking the first aperture to prevent fluid from exiting the inlet side of the filter during engine shut down. The relief valve is arranged adjacent to the second aperture for selectively blocking the second aperture to permit fluid to flow past the relief valve during high differential pressure conditions, such as for cold starts and plugged elements in oil filter applications. The fluid flows into a cavity defined by the anti-dream back and relief valves prior to deflecting one of the valves to permit the fluid to flow through the filter.

In one example embodiment, the relief valve is arranged generally longitudinally sealing against an inner surface of the center tube. In the example shown, a recess may be arranged to support the valve on the center portion. In this arrangement, the valve assembly also acts as a seal between the center portion and end portion. A separate anti-drain back valve is held between an end disc and a center tube collar.

The inventive arrangement significantly reduces the number of valve assembly components and eliminates the seal typically used between the center portion and end portion. Moreover, the overall size of the valve assembly is reduced, which permits the use of either a smaller filter or a larger filter element.

### BRIEF DESCRIPTION OF THE DRAWINGS

Other advantages of the present invention can be understood by reference to the following detailed description when considered in connection with the accompanying drawings wherein:
Figure 1 is a cross-sectional view of a fluid filter with an example of the inventive valve assembly with separate relief and anti-drain back valves.
Figure 2 is an enlarged cross-sectional view of the anti-drain back valve shown in Figure 1.
Figure 3 is an enlarged cross-sectional view of the relief valve shown in Figure 1.

### DETAILED DESCRIPTION OF THE PREFERRED EMBODIMENT

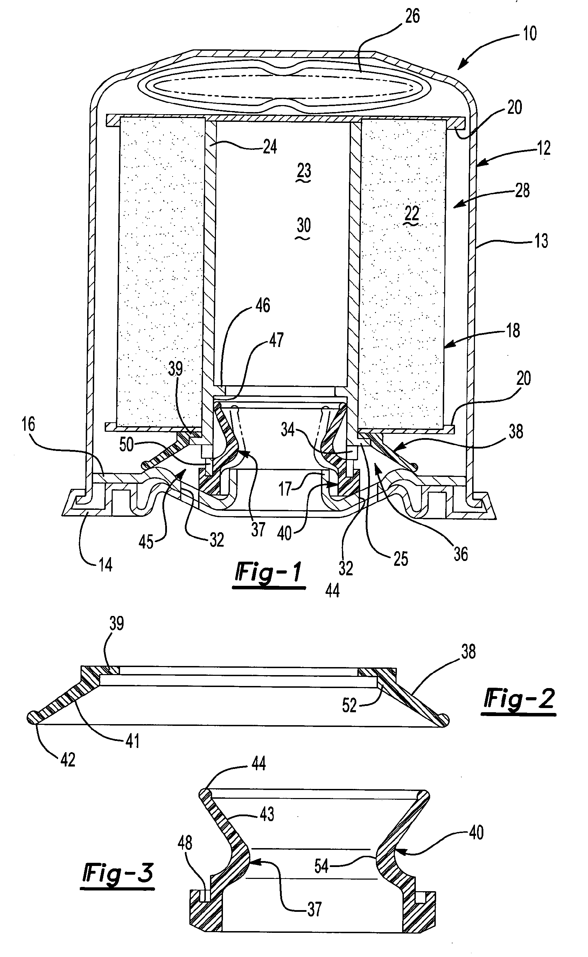

A fluid filter 10 is shown in Figure 1. The filter 10 shown is suitable for use as a vehicle oil filter, however, this invention may be used in any fluid filter application. The filter 10 comprises a housing 12 including a can 13 with a retainer 14 secured to the open end of the can. The housing 12 also includes a tapping plate 16 typically arranged interiorly and adjacent to the retainer 14. The tapping plate 16 includes a central threaded hole 17 for securing the filter 10 to a structure having fluid passages that carry the fluid to and from a desired location such as a vehicle engine.

A filter assembly 18 is arranged within the housing 12. The filter assembly 18 includes end discs 20 having a filter media 22, such as a paper filter element, arranged between the end discs 20 in any suitable manner, which is well known in the art. The filter media 22 may define a central opening 23. Typically, the filter media 22 is a pleated paper element having a center tube 24 inserted into a central opening 23 of the filter media 22 to provide structural support for the pleated paper element. The center tube 24 has openings to permit fluid flow through the center tube 24. The center tube 24 has a collar 25 for axially locating the center tube 24 relative to the filter assembly 18. A guide 26 is arranged between the filter assembly 18 and the housing 12 to position the filter assembly 18 in a desired manner during assembly of the filter 10.

The filter 10 has an inlet side 28 on one side of the filter media 22 and an outlet side 30 on the opposite side of the filter media 22. For the arrangement shown, the inlet side 28 corresponds to the outside of the filter assembly 18, and the outlet side 30 corresponds to the inside or central opening 23. The retainer 14 and tapping plate 16 include apertures 32 to permit fluid to flow from the structure supporting the filter 10 to the inlet side 28. During normal operation, the fluid flows through the filter media 22 to the central opening 23, which corresponds to the outlet side 30, to remove debris from the fluid. Fluid then flows through the central opening 23 and exits through the threaded hole 17 back through the structure supporting the filter 10. However, it is to be understood that the fluid flow may be other than described above depending upon the application and customer specifications.

It is desirable to incorporate valves within the filter to prevent fluid from draining from the dirty or inlet side 28 of the filter 10 back to the structure supporting the filter 10 during engine shut down. It is also desirable to provide valves within the filter 10 to permit fluid to bypass the filter assembly 18 during high differential pressure conditions, such as vehicle cold starts at very low temperatures in which the fluid may be very viscous and when the filter assembly 18 is plugged with debris. In the prior art, these valves have been separate and have included many components, in particular with respect to the relief valve.

The inventive valve assembly 36 comprises a separate two-piece anti-drain back valve 38 and relief valve 40. As best shown in Figure 2, the anti-drain back valve 38 includes a first annular lip 41 ending to a first terminal end 42. Similarly, the relief valve 40 includes a second annular lip 43 ending to a second terminal end 44, best shown in Figure 3. The terminal ends 42, 44 include enlarged portions that better enable the lips 41, 43 to seal against their respective sealing surfaces. A hole defined by circumference at 37 in the relief valve 40 permits fluid flow through the filter 10.

Returning to Figure 1, the anti-drain back valve 38 is arranged adjacent to the aperture 32 in the retainer 14 and tapping plate 16. An inner portion 39 of the anti-drain back valve 38 is captured between the end disc 20 and collar 25. The valves 38 and 40 together form a cavity 45 in which the fluid must enter prior to deflecting one of the valves 38 and 40 and flowing through the filter. The anti-drain back valve is deflected upward due to positive flow pressures to permit fluid flow into the inlet side 28 of the filter 10. The terminal end 42 of the anti-drain back valve 38 seals against a raised portion of the tapping plate 16 to prevent fluid on the inlet side 28 from carrying debris and oil from the filter media 22 out of the filter 10 during engine shut down. The center tube 24 includes an opening 34. The relief valve 40 is arranged within the center tube 24 in a generally longitudinal orientation and adjacent to the opening 34 for preventing fluid from bypassing the filter assembly 18 during normal operation. However, during conditions in which the fluid is very viscous such as during vehicle cold starts at low temperatures, or when filter assembly 18 becomes plugged with debris it may be desirable to bypass the filter assembly 18 in which case the terminal end 44 is forced out of engagement with the inner surface 47 due to high differential pressures.

The relief valve 40 is captured between the center tube 24 and the tapping plate 16. The relief valve 40 includes an annular recess 48 with an end 50 of the center tube 24 received in the recess 48. The relief valve 40 in the area of the recess 48 forms a U-shaped portion forming a seal between the center tube 24 and tapping plate 16 preventing fluid from bypassing the filter assembly 18. In this manner, the relief valve 40 eliminates the separate seal typically used between the center tube 24 and tapping plate 16.

The valve assembly 36 may be an elastomeric material such as a rubber. The pressures at which the valves 38 and 40 may be opened may be modified by using rubbers of different durometers or varying the thicknesses in desired areas of the valves 38 and 40 to change the opening characteristics of the valves 38 and 40. Since the valves 38 and 40 are separate from one another, different materials may be used. For example, the valves 38 and 40 respectively include "knees" 52, 54 that act as fulcrums. The locations, geometry, and thickness of the knees 52, 54 may be varied to change the opening characteristics.

The two-piece valve assembly 36 also simplifies assembly as compared to prior art arrangements. The anti-drain back valve 38 is inserted onto the center tube 24, and the center tube 24 is inserted into the filter assembly 18 until the valve 38 abuts the end disc 20 and collar 25. The end disc 20 is movable relative to the collar 25 so that the inner portion 39 may be compressed during assembly to more securely retain the valve 38. The relief valve 40 is installed onto the end 50 so that the end 50 is received in the annular recess 48. The filter assembly 18 and valves 38 and 40 are installed into the can 13 and the tapping plate 16 and retainer 14 are assembled onto the can 13 so that the valves 38 and 40 seal against the tapping plate 16.

The invention has been described in an illustrative manner, and it is to be understood that the terminology that has been used is intended to be in the nature of words of description rather than of limitation. Obviously, many modifications and variations of the present invention are possible in light of the above teachings. It is, therefore, to be understood that within the scope of the appended claims the invention may be practiced otherwise than as specifically described.

## Claims

1. A fluid filter comprising:
a housing having an end portion with a first aperture;
a center portion arranged in said housing and proximate to said end portion, said center portion extending generally longitudinally and including a second aperture; and
a valve assembly captured by said center portion and said end portion and including a flexible relief valve adjacent to said second aperture for selective blocking said second aperture when in a closed position, said relief valve disposed within said center portion.

2. The fluid filter according to claim 1, wherein said relief valve is formed from an elastomeric material.

3. The fluid filter according to claim 1 or 2, wherein said relief valve includes a U-shaped portion defining a recess with an end of said center portion received in said recess.

4. The fluid filter according to claim 3, wherein said relief valve extends from said U-shaped portion to a terminal end, said terminal end sealing against an inner surface of said center portion in said closed position.

5. The fluid filter according to claim 4, wherein said terminal end includes an enlarged portion sealing against said center portion.

6. The fluid filter according to claim 3 or 4 or 5, wherein said U-shaped portion seals against said end portion preventing fluid flow past said U-shaped portion between said first and second apertures.

7. The fluid filter according to any preceding claim, wherein said relief valve includes a circular cross-section.

8. The fluid filter according to any preceding claim, wherein said valve assembly includes an anti-drain back valve spaced outwardly from said relief valve, said anti-drain back valve captured between said center portion and an end disc, said anti-drain back valve movable relative to said center portion.

9. The fluid filter according to claim 8, including a filter element arranged within said housing and defining a central opening, said center portion comprising a center tube arranged within said central opening.

10. The fluid filter according to claim 9, wherein a side of said filter element adjacent to said center tube is a fluid outlet side and an opposing side of said filter element is a fluid inlet side, said relief valve arranged between said fluid inlet and outlet sides at said first aperture, and said anti-drain back valve arranged between said second aperture and said fluid inlet side.

11. The fluid filter according to any one of claims 8 to 10, wherein said relief and anti-drain back valves include annular lips oriented transverse to one another.

12. The fluid filter according to any preceding claim, wherein said end portion is a tapping plate including a threaded central aperture.

13. A fluid filter valve comprising:
an elastomeric structure including an annular recess formed by a U-shaped portion, and a lip extending from said recess to a terminal end, said structure having a central hole arranged radially inwardly of said terminal end and said recess, and a fulcrum provided at said central hole.

14. The fluid filter valve according to claim 13, wherein said terminal end includes an enlarged portion.
